# EUROPÄISCHE PATENTSCHRIFT

(11) **EP 0 752 295 B1**
(45) Veröffentlichungstag und Bekanntmachung des Hinweises auf die Patenterteilung: **19.01.2000**
(21) Anmeldenummer: 96810403.4
(22) Anmeldetag: 18.06.1996
(51) Int. Cl.: B23K 20/02, A47J 27/00, A47J 36/02, B21D 22/06

(54) **Verfahren, Gesenkwerkzeug und dessen Verwendung zur Herstellung von Kochtöpfen und Pfannen**
Method, punch-die tool and use thereof for the manufacture of cooking pots and pans
Procédé, outil poinçon-matrice et son utilisation pour la fabrication de casseroles et poêles

(30) Priorität: 03.07.1995 CH 193695
(43) Veröffentlichungstag der Anmeldung: 08.01.1997
(73) Patentinhaber: Heinrich Kuhn Metallwarenfabrik AG, 8486 Rikon im Tösstal (CH)
(72) Erfinder: Ahbe,Stephan, 42579 Heiligenhaus (DE); Schoellkopf, Jürgen, 9642 Ebnat-Kappel (CH)
(74) Vertreter: Felber, Josef

(56) Entgegenhaltungen:
- EP-A- 0 525 453
- DE-A- 2 258 795
- US-A- 4 782 993

## Beschreibung

Die vorliegende Erfindung betrifft ein Verfahren zur Herstellung von Kochtöpfen und Pfannen, bei dem auf den Gefässboden aus rostfreiem Stahl eine wärmeleitfähige Platine bei einer Temperatur bis nahe unterhalb ihres Material-Schmelzpunktes durch Impulspressung aufgeschlagen wird, und auf welche ihrerseits gleichzeitig eine Abkapselung aus rostfreiem Stahl aufgeschlagen wird, derart, dass der Raum zwischen Abkapselung und Gefässboden praktisch vollständig mit Platinenmaterial befüllt wird und der Rand der Abkapselung mittels der Impulspressung geformt und dicht mit dem gekrümmten Randbereich des Gefässbodens verbunden wird. Weiter betrifft die Erfindung ein Gesenkwerkzeug für die Ausübung des Verfahrens sowie die Verwendung dieses Gesenkwerkzeuges.

Das Verbinden des Bodens eines Pfannen- oder Topfgefässes mit einer wärmeleitfähigen Platine und einer sie einschliessenden rostfreien Stahl-Kapsel wird heute mittels eines Aufschlagverfahrens durch eine sogenannte Impulspressung realisiert. Ein solches Aufschlagverfahren ist spätestens seit dem 20. Mai 1976 bekannt und geht auf eine Erfindung von Ferdinando Cartossi zurück, der erstmals am 22. April 1972 in Italien unter der Nummer 23434.72 und am 4. August 1972 unter der Nummber 27923.72 ein solches Verfahren anmeldete, bei dem die Oberflächen der zu verbindenden Teile nicht mehr vorbehandelt zu werden brauchen, um zunächst den Oxydfilm zu entfernen, wie das vorher nötig war. Es ging dabei vorallem darum, eine möglichst innige Verbindung des Chrom-Nickel-Stahls des Pfannengefässes oder Topfgefässes mit einer wärmeleitfähigen Platine, vorzugsweise mit einer Aluminiumplatte oder Kupferplatte, zu erzielen, wobei diese Verbindung möglichst kostengünstig hergestellt werden sollte. Das Verfahren ermöglicht es, dass eine aufwendige Reinigung der zu verbindenden Flächen entfallen kann und zum Ausüben des Verfahrens wird auch keine inerte Atmosphäre benötigt. Das deutsche Patent 22 58 795, welches auf den Prioritäten der beiden obengenannten Anmeldungen gründet, offenbart ein Aufschlagverfahren zur Herstellung einer Pfanne oder eines Topfes mit einer wärmeleitfähigen Grundplatte, welche auflageseitig optional eine Schutzverkleidung aus rostfreiem Stahl aufweist. Die Verbindung durch das Aufschlagen wird dadurch erzielt, dass zunächst die zu verbindenden Teile mittels einer punktförmigen Schweissung im zentralen Bereich fixiert werden. Danach werden die zu verbindenden Materialien in einem Ofen bis in die Nähe des Schmelzpunktes der wärmeleitfähigen Platte oder Platine erhitzt, wonach das Aufschlagen unter grossem Schlagdruck von bis zu 35'000 N/cm² mit einem die Grundplatte umschliessenden Werkzeug erfolgt. Dank dem grossen Schlagdruck wird der Oxydfilm zerrissen und dank der spielfreien Werkzeuge kann das Material sich auch im weichen Zustand nicht unkontrolliert verformen, sondern wird passgenau und ohne Ueberschuss in die vorgegebene Werkzeugform gepresst. Die Schutzverkleidung aus rostfreiem Stahl kann in Sandwich-weise bloss flach sein und bleiben, wobei die Grundplatte von der Seite einsehbar bleibt, oder aber beim Aufschlagen der flachen Blechscheibe kann diese an ihrem die Grundplatte überstehenden Rand umgestülpt werden, sodass sie die Grundplatte vollständig einkapselt und mit ihrem äusseren Randbereich am Topf- oder Pfannengefäss zum Anhaften gebracht wird. Am 26. Juni 1985 meldete Fernando Cartossi ein weiterentwickeltes Verfahren an (Siehe US-A-4 782 993), nach welchem unter anderem die Einkapselung mittels Aufschlagens eines vorgeformten Chromstahl-Bleches erzielt wird. Nach jenem Verfahren wird mit einer wärmeleitfähigen Platte gearbeitet, welche anfänglich mindestens 20% dicker ist als nach der Verformung. Zunächst werden die zu verbindenden Materialien mittels einer Punktschweissung fixiert, vorzugsweise mit einer elektrischen Widerstands-Schweissung. Danach wird die Platte beziehungsweise Platine bis in die Nähe ihres Schmelzpunktes erhitzt. Das eigentliche Aufschlagen der Platine und der Kapsel auf den Gefässboden, sowie die damit zusammenhängende Verformung dieser Teile wird dann mittels konvex nach aussen gekrümmter Werkzeuge durchgeführt, sodass das Platinenmaterial vom Zentrum gegen aussen verpresst wird. Einerseits wird dadurch erzielt, dass die Gase zwischen den verpressten Materialien radial nach aussen ausgetrieben werden und somit ein Gaseinschluss vermieden wird, und andrerseits stellt sich dadurch in der Platine ein radialer Materialfluss ein, welcher sicherstellt, dass alle Hohlräume zwischen dem Gefäss und der Kapsel satt ausgefüllt werden. Schliesslich wird in der Endphase der Verformung der Rand der Kapsel in seine endgültige Form gepresst und dabei dicht mit der Gefässwandung oder mit dem gekrümmten Bereich des Gefässboden-Randes verbunden. Die Platine wird also in eine konkave Linsenform gepresst, wobei das Mass der Konkavität mindestens 0,25% des Platinen-Durchmessers ausmacht. Eine ganz leichte Konkavität ist erwünscht, damit die fertige Pfanne oder der Topf immer mit seinem Randbereich satt aufliegt und nicht etwa im Zentrum so aufliegt, dass er sich wie ein Karussell drehen liesse. Das europäische Patent 0'525'453 fügt zu diesen technischen Sachverhalten dazu, dass in Kombination mit ihnen mit einer Platine gearbeitet werden soll, die anfänglich maximal 16% dicker ist als nach der Impulspressung.

Die zunehmend eingesetzten Induktions-Kochherde verlangen Kochtöpfe und Pfannen mit induktionsfähigen Böden. Das heisst, die Abkapselung der Platine muss induktionsfähig in dem Sinne sein, dass in ihr auf den heutigen Induktionsherden mit den üblichen Arbeitsfrequenzen von ca. 25 kHz derartige Kreisströme induzierbar sind, die letztlich zu einer hinreichenden Erhitzung der Platine führen. Hierzu werden für die Abkapselung ferromagnetische Stähle, zum Beispiel 13%- bis 17%ige Chromstähle verwendet. Eine nicht induktionsfähige Abkapselung verunmöglicht diese Art der indirekten Erhitzung und somit das Kochen auf einem Induktionsherd. Als Material für die Kochtöpfe und Pfannen wird üblicherweise ein nicht-magnetischer Chrom-Nickelstahl mit einem Chromgehalt von ca. 18% und einem Nickelgehalt von ca. 10% eingesetzt. Dieser Stahl für das eigentliche Gefäss muss besonders korrosionsfest sein. Ausserdem muss er tielkiehbar und polierbar sein. Es zeigt sich aber, dass dieses Material für die Einkapselung der Platine nicht geeignet ist, wenn mit dem Kochtopf oder der Pfanne auf Induktionskochherden gekocht werden soll. Die Pfanne oder der Kochtopf lässt sich auf solchen Herden nicht erhitzen. Als Material für eine induktionsfähige Abkapselung eignet sich aber zum Beispiel ein 13-17%iger Chromstahl, ohne oder zumindest ohne nennenswerten Nickelgehalt. Beim Aufschlagen einer Aluminium- oder Kupferplatine auf einen Gefäss- oder Pfannenboden aus nicht-magnetischem Chrom-Nickelstahl und deren Einkapselung mit einem induktionsfähigen Chromstahl entsteht gewissermassen ein Sandwich aus drei verschiedenen Materialien. Der Chromstahl mit dem Platinenmaterial einerseits bildet ein Bimetall und gleichermassen bildet andrerseits auch der Chrom-Nickelstahl mit der Platine ein Bimetall. Nun gibt es aber eine erhebliche Differenz zwischen den thermischen Ausdehnungskoeffizienten all dieser Materialien. Wäre nun die Platine von erheblicher Dicke im Vergleich zu den aufgeschlagenen rostfreien Stahlblechen, so würde das keine grosse Rolle spielen. Die Platine, die bei hoher Temperatur von ca. 300°C bis 600°C mit diesen rostfreien Blechen verbunden wird, würde sich nach der Auskühlung dank ihrer Stärke nicht verziehen. Nun aber will man ja mit einer möglichst dünnen Platine arbeiten, die wohl noch den Wärmeübergang gewährleistet und eine gewisse Wärmekapazität aufweist, jedoch möglichst Gewicht und Material einspart. Dadurch entsteht ein Zielkonflikt. Je dünner die Platine, umso mehr wird sie bei der Auskühlung verzogen. Weil das induktionsfähige Kapselmaterial einen niedrigeren Ausdehungskoffizienten aufweist als das Material des Gefässes, hat das folgende Wirkung: Im erhitzten Zustand ist der Gefässboden stärker expandiert als die Kapsel. In diesem erhitzten Zustand werden diese beiden rostfreien Stahlbleche mit der Platine verbunden. Bei der Auskühlung erfährt das Gefässmaterial entsprechend ein stärkeres Zusammenziehen als die Kapsel. Daher würde ein Boden, der im erhitzten Zustand genau eben wäre, nach der Auskühlung am Gefäss konvex, sodass dieses in der Mitte aufliegen würde und somit keine stabile Auflage hätte. Aus diesem Grund schlägt man die Platine und die Kapsel derart auf den Gefässboden, dass die drei Boden-Materialien nach dem Aufschlagen am Gefäss einen konkaven Boden bilden. Durch das Auskühlen verringert sich die Konkavität und es wird ein beinahe ebener Boden erreicht. Eine ganz leichte Konkavität ist erwünscht, damit eine stabile Auflage auf einer Ebene sichergestellt ist. Setzte man nun Platinen mit einer Stärke von anfänglich ca. 5 mm ein, so zeigte es sich, dass mit dem Aufschlagen verschiedener Materialien auf beiden Seiten der Platine mit den Verfahren gemäss dem eingangs erwähnten Stand der Technik wegen des Bimetall-Effektes der fertige Gefässboden nach der Auskühlung stets leicht verzogen war. Genaue Untersuchungen zeigten, dass der Boden spontan entstandene Erhebungen oder Beulen und Vertiefungen oder Dellen aufwies. Zuweilen macht die Höhendifferenz zwischen den Erhebungen und Vertiefungen bis zu einem Millimeter aus. Das führt dazu, dass solche Töpfe oder Pfannen auf der Herdplatte instabil aufliegen und zudem optisch unakzeptable Erzeugnisse darstellen. Nur ein nachträgliches Richten könnte den Mangel einigermassen beseitigen, wenngleich das technisch nicht zufriedenstellend gelöst werden kann und zudem natürlich nicht wirtschaftlich machbar ist. Andrerseits bestünde die Möglichkeit, anstelle einer Nickel-freien oder Nickel-armen Kapsel eine Kapsel aus einem Material-Laminat aufzuschlagen, welches in Sandwich-Form aus zum Beispiel einem induktionsfähigen 17%-igen Chromstahlblech und beidseits darauf liegenden dünnen Chromnickelstahlblechen besteht. Ein solches Material-Laminat ermöglicht das Kochen auf einem Induktionsherd, ist jedoch sehr teuer.

Es ist daher die Aufgabe der vorliegenden Erfindung, ein Verfahren zur Herstellung von Kochtöpfen und Pfannen anzugeben, welches den Einsatz von Platinen herkömmlicher Stärke oder dünneren erlaubt, wobei durch das Verfahren sicherzustellen ist, dass auch beim Einsatz von induktionsfähigen Abkapselungen beim Auskühlen kein unerwünschtes Verziehen des Gefäss- oder Pfannenbodens entsteht. Eine weitere Aufgabe der Erfindung ist die Angabe eines Gesenkwerkzeuges zum Erreichen dieses Zieles.

Diese Aufgabe wird gelöst von einem Verfahren zur Herstellung von Kochtöpfen und Pfannen, bei dem auf den Gefässboden aus rostfreiem Stahl eine wärmeleitfähige Platine bei einer Temperatur nahe unterhalb ihres Material-Schmelzpunktes durch Impulspressung aufgeschlagen wird, und auf welche ihrerseits gleichzeitig eine Kapsel aus rostfreiem Stahl aufgeschlagen wird, derart, dass der Raum zwischen der Kapsel und dem Gefässboden praktisch vollständig mit Platinenmaterial befüllt wird und der Rand der Kapsel mittels der Impulspressung geformt und dicht mit dem gekrümmten Randbereich des Gefässbodens verbunden wird, dadurch gekennzeichnet, dass die Kapsel aus induktionsfähigem Material besteht und in diese Kapsel mittels des Gesenkwerkzeuges eine Wellenform geschlagen wird, mit dem Zweck, die aufgrund des bei der Auskühlung wirkenden thermischen Bimetall-Effektes entstehenden Verziehkräfte in definierte Bahnen zu leiten und so einen regelmässigen Pfannenboden oder Topfboden zu erzielen.

Ein Gesenkwerkzeug zur Herstellung von Kochtöpfen und Pfannen nach dem erfindungsgemässen Verfahren ist im Anspruch 9 definiert.

Anhand der Zeichnungen wird das Verfahren im einzelnen erläutert und erklärt, und die Spezialität an dem dafür eingesetzten Gesenkwerkzeug wird beschrieben.

Dabei zeigt:
- Figur 1:: Die drei grundsätzlichen Merkmale der beiden Gesenk- oder Press-Werkzeugteile in stark übertriebener Darstellung je einzeln in den Zeichnungen (a-c), und superponiert in Kombination miteinander in Zeichnung (d);
- Figur 2:: Den Stempel, das darauf gestülpte Gefäss, die Platine und die Kapsel sowie das bewegliche Gesenkwerkzeug in einem Querschnitt, vor der Impulspressung, aber nach erfolgter zentraler Verschweissung mittels elektrischer Widerstandsschweissung;
- Figur 3:: Die Teile aus Figur 1 im Verlauf der Impulspressung, etwa in der zeitlichen Mitte des Verfahrens;
- Figur 4:: Die Teile aus Figur 1 nach vollendeter Impulspressung;
- Figur 5:: Das fertige Gefäss mit den miteinander verbundenen Werkstücken Gefäss, Platine und Kapsel nach der Auskühlung im Querschnitt und in perspektivischer Darstellung.

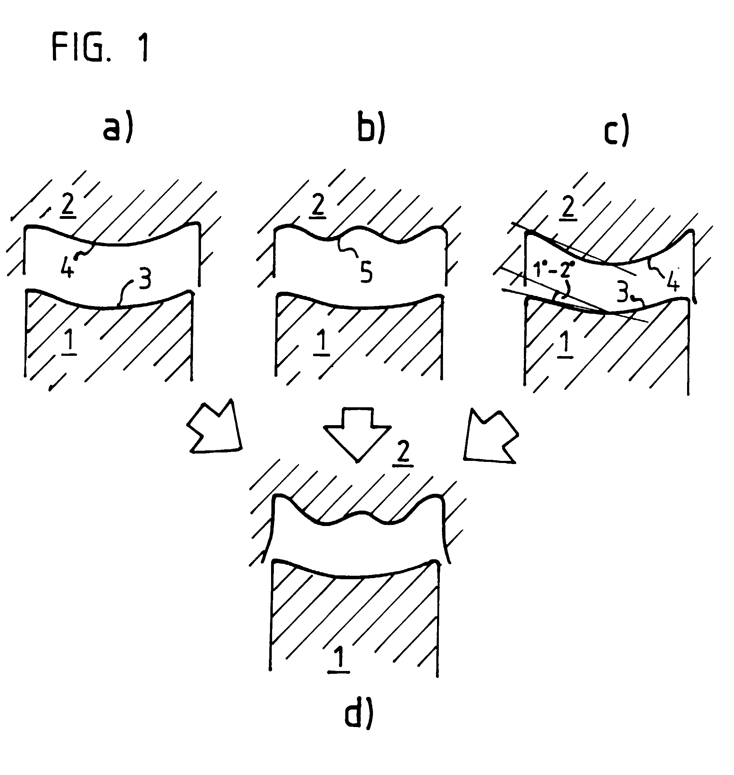

In Figur 1 sind die drei wichtigen grundsätzlichen Merkmale der Impuls-Presswerkzeuge in stark übertriebener Darstellung gezeigt, um deren Wirkung im Verlaufe der Verfahrensausübung klarzumachen. Die Impulspresswerkzeuge beinhalten einen stationären Stempel 1 und ein bewegliches Gesenkwerkzeug 2. Ueber den Stempel 1 wird das zu bearbeitende Gefäss kopfüber gestülpt. Auf dem dann nach oben zeigenden Gefässboden liegt die Platine und die Kapsel, die vorgängig mit dem Gefässboden mittels einer elektrischen Widerstandsschweissung fixiert werden. Die eigentliche Impulspressung erfolgt nach dem Erhitzen der Platine in die Nähe ihres Schmelzpunktes, bei Aluminium als Platinenmaterial daher bei einer Temperatur von bis gegen 600°C. Damit nun der Bimetall-Effekt, welcher auf beiden Seiten der Platine mit der Abkühlung unterschiedlich wirksam wird, nicht zu den eingangs erwähnten Beulen und Dellen im fertigen Gefässboden beziehungsweise in dessen Abkapselung führt, und dieser Boden im ganzen gesehen annähernd eben wird, und weiter damit die Platine den ganzen Raum zwischen dem Gefässboden und der Abkapselung ausfüllt und die Abkapselung in gewohnter Manier dicht und fest mit dem Gefäss-Bodenrand verbunden wird, sind die in Figur 1 dargestellten Merkmale an den Werkzeugen nötig.

Wie zunächst in Figur 1a) gezeigt, muss der Stempel 1 leicht konkav nach innen gekrümmt sein und also eine konkave Krümmung 3 aufweisen, wodurch auch der zu bearbeitende Gefässboden durch die Impulspressung in eine von aussen gesehen leicht konkave Krümmung gepresst wird. Wenn man unmittelbar nach der Pressung in das Gefäss hineinschaut, wird man dort entsprechend eine konvexe Krümmung nachmessen können. Auch das bewegliche Gesenk 2 formt den Boden in eine absolut gesehen gleichgerichtete, im Prinzip parallel verlaufende Krümmung 4. Entsprechend muss dieses Gesenk 2 von aussen gesehen eine im allgemeinen konvexe Krümmung 4 aufweisen. Wiederum wird am bearbeiteten Gefäss dadurch ein von aussen gesehen konkaver Boden geformt. Diese grundsätzliche Impulspressung des schliesslich den Boden der Pfanne oder des Topfes bildenden Material-"Sandwiches" oder Material-Laminates in eine dermassen gekrümmte Form erzeugt eine bewusste Vorspannung, welche durch das spätere Auskühlen kompensiert wird, sodass schliesslich ein im wesentlichen ebener Pfannen- oder Topfboden entsteht. Der Grund für diese Zurückformung bei der Auskühlung liegt darin, dass der Ausdehnungskoeffizient des auf den beiden Seiten der Platine aufgeschlagenen rostfreien Stahls unterschiedlich ist. Der Ausdehnungskoeffizient des nicht-magnetischen Chrom-Nickel-Stahls des eigentlichen Gefässes ist nämlich beträchtlich grösser als jener des Materials der aufgeschlagenen induktionsfähigen Kapsel. Diese besteht nämlich aus induktionsfähigem, zum Beispiel 13-17%-igem Chromstahl. Während der Impulspressung werden die Materialien erhitzt und entsprechend dehnt sich der Gefässboden aus Chrom-Nickelstahl stärker aus als die Abkapselung. In diesem ausgedehnten Zustand erfolgt die Materialverbindung. Mit der Auskühlung zieht sich der Gefässboden aus dem Chrom-Nickelstahl entsprechend wiederum stärker zusammen als die Abkapselung und bewirkt so ein Zurückbilden der Krümmung, sodass nach erfolgter Abkühlung ein praktisch ebener Topf- oder Pfannenboden entsteht. Aber dieses Werkzeug-Merkmal nach Figur 1a alleine genügt noch nicht, um das gewünschte Erzeugnis herzustellen. Gerade wegen der unterschiedlichen Ausdehnungskoeffizienten der beiden mit der Platine zu verbindenden Materialien entstehen über die Platine selbst verteilt auch Spannungen, die bei der Auskühlung zu einem leichten Verziehen des Pfannen- oder Topfbodens führen. Dieses Verziehen manifestiert sich in Beulen und Dellen, die sich spontan ausbilden. Mit spontan ist in diesem Zusammenhang gemeint, dass die Beulen und Dellen bei jedem bearbeiteten Gefäss anders lokalisiert sind, immer gerade je nachdem, wo die spezifischen Werkstücke in ihrer inneren Struktur gerade die schwächsten und stärksten Stellen aufweisen. Diese Struktur variiert natürlich von Werkstück zu Werkstück in einer bestimmten Bandbreite.

Mit dem in Figur 1b) gezeigten Werkzeugmerkmal gelingt es nun, diese bei der Abkühlung entstehenden Spannungen zwischen dem aufgeschlagenen Material und der Platine in vordefinierte Bahnen zu zwingen, sodass die Auswirkungen des nach wie vor stattfindenden Verziehens technisch und optisch nicht mehr stören und also ein Stück um Stück stets gleichbleibender Gefässboden entsteht. Das wird wie gezeigt erreicht, indem man der im allgemeinen konkaven Krümmung 4 des Gesenkwerkzeuges 2 eine Wellenform 5 überlagert, die bezüglich des Zentrums der Press- oder Arbeitsfläche zum Beispiel konzentrisch angeordnete Wellen oder ähnliche Wellen aufweist. Die Wellenform 5 wird so gewählt, dass im Zentrum des beweglichen Gesenkwerkzeuges 2 eine Vertiefung vorhanden ist, und von diesem Punkt aus radial gegen aussen wenigstens eine zum Beispiel sinusförmige Wellenperiode untergebracht ist. Dadurch entstehen am mit dieser Werkzeugform gepressten Gefässboden zwei Maxima, nämlich eines im Zentrum des Gefässbodens und eines in Form eines konzentrischen Ringes nahe dem Gefässboden-Rand, wobei das Maximum im Gefässboden-Zentrum gegenüber jenem nahe des Randes wegen der im allgemeinen konkaven Gesenkform leicht zurückversetzt ist. Diese Form des Gefässbodens gewährleistet am fertigen Gefäss einen satten Stand mit einer definierten Auflagefläche auf der konzentrischen, ringförmigen Erhöhung. Es wird also sicher vermieden, dass das Gefäss etwa im Zentrum aufliegt und sich somit um diesen zentralen Auflagepunkt drehen könnte. Anstelle von konzentrischen Wellen sind zum Beispiel solche von ovaler bzw. elliptischer Form möglich. Weiter sind auch Wellen mit beim Blick auf den Gefässboden rosettenartiger Form denkbar, das heisst solche mit einer längs des Umfanges schlangenlinienförmigen Wellenfront, oder solche mit noch anderen Formen.

Das dritte wichtige Merkmal ist aus der Figur 1c ersichtlich. Hier wird wiederum übertrieben dargestellt, dass die Konvexität 4 des beweglichen Gesenkes 2 ausgeprägter sein muss als die Konkavität 3 des Stempels 1. Verbindet man jeweils den höchsten und den tiefsten Punkt der Krümmungen, so ergibt sich zwischen diesen beiden Krümmungen von Gesenk 2 und Stempel 1 ein Unterschied in der Grössenordnung von ca. 1 bis 2 Winkelgraden, wie das in der Figur 1c angedeutet ist. Der Grund für diesen Unterschied in der Ausgeprägtheit der Krümmungen ist der, dass im Verlauf der Impulspressung eine Verformung des Platinenmaterials vom Zentrum her gegen aussen stattfinden soll. Mit dieser Massnahme wird in der Platine ein gewisser Materialfluss in radialer Richtung erzeugt. Dieser Materialfluss bewirkt zum einen, dass die Verbindung mit den aufzuschlagenden rostfreien Stählen inniger wird, weil eine Relativbewegung zwischen den Oberflächen der Stahlbleche und der Platine entsteht, und andrerseits ist damit auch sichergestellt, dass die zwischen den Materialien befindlichen Gase radial entweichen können und es nicht zum Einschluss von Gasblasen kommt. Schliesslich liegt ein dritter Grund dieser Ausformung darin, dass der Materialfluss der Platine sicherstellen muss, das die Abkapselung im Randbereich bis zum Zeitpunkt, wo diese durch die fortschreitende Impulspressung mit dem Gefässbodenrand verbunden wird, satt mit dem Platinenmaterial ausgefüllt wird.

Die Erfindung arbeitet deshalb mit einem Verfahren, welches diese eben erläuterten Werkzeugmerkmale alle in sich vereinigt und zum Einsatz bringt. Die Figur 1d zeigt in übertriebenem Massstab die Superponierung all dieser Merkmale an einem Stempel 1 und mit zugehörigem Gesenk 2 realisiert. Man presst also erstens den Boden mit *beiden* Werkzeugteilen, also mit dem Stempel *und* dem Gesenk, in eine leicht konkave Form. Zweitens schlägt man in die Abkapselung ausschliesslich mittels des beweglichen Gesenkes 2 eine Wellenform 5, vorzugsweise eine konzentrische, welche der Krümmung 4 des Gesenkes 2 überlagert ist. Und drittens deformiert man im Verlaufe der fortschreitenden Impulspressung durch die verschiedene Ausgeprägtheit der Krümmungen an Gesenk 2 und Stempel 1 die Platine vom Zentrum gegen aussen hin. Mit der Kombination all dieser Merkmale lässt sich ein nicht-magnetisches, rostfreies Stahlgefäss aus Chromnickelstahl mit induktionsfähiger Bodenabkapselung herstellen, wobei eine Platine von herkömmlicher Stärke, zum Beispiel ca. 2,5% ihres Durchmessers, oder dünner, eingeschlossen wird, ohne dass dabei unliebsame Folgeerscheinungen der durch das Verziehen induzierten Kräfte hingenommen werden müssen. Diese Kräfte werden mittels der vorgepressten, im Querschnitt sinusförmigen Wellenform in definierte Bahnen gezwungen und so wird eine spontane Beulen- und Dellenbildung im Gefässboden wirksam vermieden.

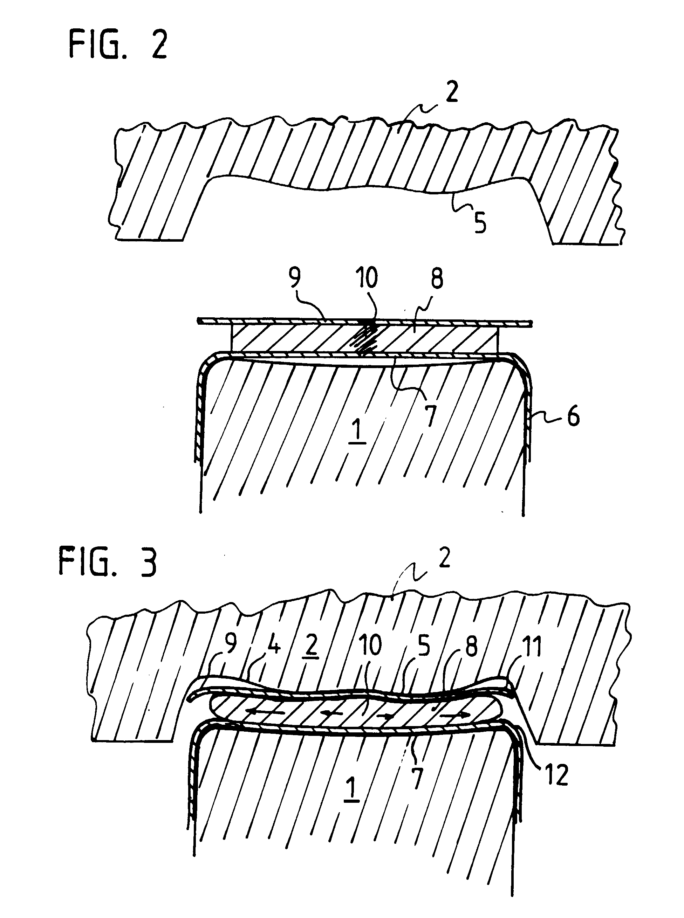

In Figur 2 ist das Gesenk-Werkzeug für dieses Verfahren in einem Querschnitt mit übertriebenen Massen gezeigt, wobei hier auch die zu verbindenden Werkstücke eingezeichnet sind und die Situation dargestellt ist, bevor das bewegliche Gesenk 2 niederschlägt. Auf dem Stempel 1 befindet sich umgestürzt daraufgestülpt das zu bearbeitende Gefäss 6 aus nicht-magnetischem Chrom-Nickel-Stahl. Auf dem Gefässboden 7 liegt die wärmeleitfähige Platine 8 aus zum Beispiel Aluminium oder Kupfer. Auf der Platine 8 ihrerseits liegt das Chromstahl-Blech 9, aus welchem dann die Kapsel 9 geformt wird. Dieses Chromstahl-Blech 9 ist induktionsfähig, das heisst, es ermöglicht später ein Kochen auf einem Induktions-Kochherd. Die drei zu verbindenden Werkstücke Gefäss 6, Platine 7 und Abkapselungsblech 9 bilden gewissermassen ein "Sandwich". Die einzelnen Werkstücke 6-9 werden vor der Impulspressung mittels einer zentralen Widerstandsschweissung 10 miteinander verbunden. Für die eigentliche Impulspressung wird die Platine 8 erhitzt, vorzugsweise mit elektrischen Heizmitteln, und sie wird dabei auf eine Temperatur nahe ihres Schmelzpunktes gebracht. Natürlich werden auch die anliegenden rostfreien Bleche miterhitzt. Die Impulspressung kann jetzt beginnen.

Die Figur 3 zeigt die Impulspressung etwa in der Mittes ihres zeitlichen Ablaufes. Das Gesenkwerkzeug 2 ist heruntergefahren und beaufschlagt das Blech für die Abkapselung 9 und dadurch die Platine 8 mit einem sehr hohen Aufschlagdruck in der Grössenordnung von bis ca. 35'000 N/cm². Dadurch wird das Abkapselungsblech in die Wellenform gemäss dem Werkzeug 2 gedrückt und die Platine 8 wird deformiert, wobei sich diese Deformation vom Zentrum der Platine 8 weg radial gegen aussen hin ausbreitet. Zunächst wird also nur Material im Bereich des Platinenzentrums verformt, und mit fortschreitender Pressung erfolgt die Deformation mehr und mehr auch gegen aussen hin. Es wird dabei innerhalb der Platine 8 ein Materialfluss radial gegen aussen induziert, wie das mit den Pfeilen dargestellt ist.

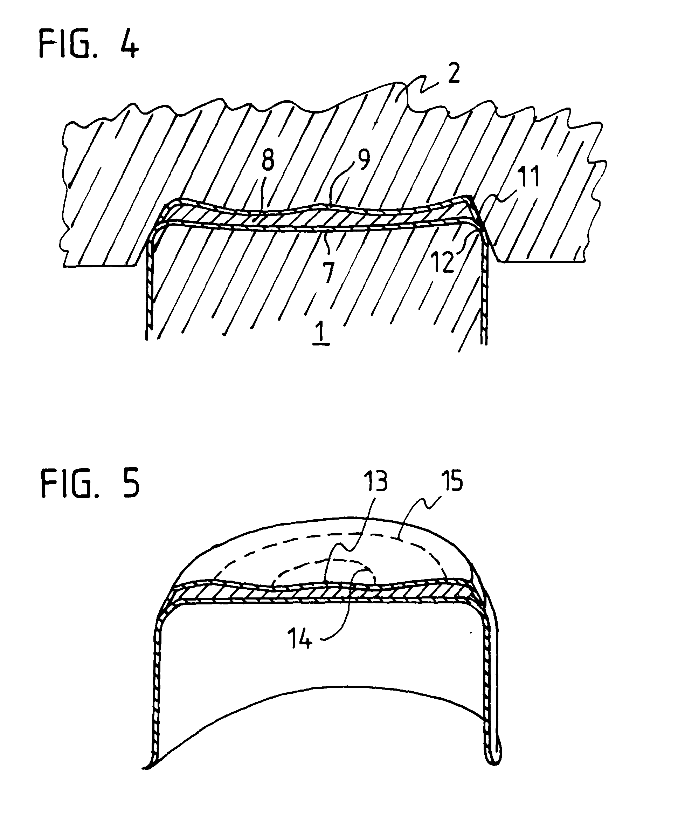

In Figur 4 ist die Situation nach vollendeter Impulspressung gezeigt. Das bewegliche Gesenk 2 ist vollständig auf den Stempel 1 hinuntergefahren und hat dabei den nunmehr aus einem Trilaminat bestehenden Gefässboden in eine leicht konkave Form gezwungen. Gleichzeitig wurde der Raum zwischen der sich im Verlaufe der Impulspressung ausgeformten Abkapselung vollständig mit Platinenmaterial ausgefüllt. In der Schlussphase der Impulspressung wurde der Rand 11 des Abkapselungsbleches oder der Kapsel 9 mittels Impulspressung mit dem hochgezogenen, gekrümmten Randbereich 12 des Gefässbodens 7 dicht verbunden. Wie in Figur 4 übertrieben dargestellt, ist der gesamte Gefässboden unmittelbar nach der Impulspressung und noch auf hoher Temperatur befindlich konkav geformt.

Die Figur 5 zeigt den fertigen Gefässboden nach seiner Auskühlung und Zurückformung infolge des beidseits der Platine 8 wirksamen Bimetall-Effektes, mit stark vergrössert dargestellten Materialstärken. Der innere Gefässboden ist nun eben, und der äussere Gefässboden ist annähernd eben, mit einer sehr geringfügigen Konkavität, wobei dieser Konkavität noch eine leichte Wellenform mit im hier gezeigten Fall konzentrischen Wellen überlagert ist. Um das besser zu verdeutlichen, zeigt die Figur 5 nicht nur den Querschnitt, sondern den hinteren Teil des Gefässes in einer perspektivischen Ansicht. Hier am gestürzten Gefäss weist dessen Boden drei Maxima auf. Das erste ist ein positives relatives Maximum 13 im Zentrum des Gefässbodens. Entsprechend dem Verlauf der Wellen folgt ein negatives bzw. das negative Maximum 14, welches konzentrisch um das Gefässbodenzentrum verläuft. Dann kommt das absolute positive Maximum 15, ebenfalls längs eines konzentrischen Kreises um das Gefässbodenzentrum, welches dann den eigentlichen Auflage"ring" bildet und somit sicherstellt, dass das Gefäss auf einer ebenen Fläche eine definierte Auflage hat. Radial anschliessend an dieses Maximum fällt der Boden am gestürzten Gefäss wieder leicht ab.

Das Verfahren und das Gesenkwerkzeug nach dieser Lehre ermöglichen es grundsätzlich, ein Gefäss mit einer wärmeleitfähigen Platine üblicher oder sogar geringerer Stärke mittels Impulspressung zu versehen, die mit einer Abkapselung eingeschlossen wird, welche ein Material mit unterschiedlichem Ausdehnungskoeffizienten gegenüber dem Gefässmaterial aufweist. Dabei erweist sich vorallem die Wellenform, welche in das Abkapselungsblech geschlagen wird, als wesentlich. Dank dieser Wellenform werden die Kräfte, welche durch das Verziehen infolge des thermischen Bimetall-Effektes bei der Auskühlung induziert werden, in eine definitive Form gezwungen, sodass keine optischen Beinträchtigungen am fertigen Gefässboden hingenommen werden müssen. Weil das mittels dieser Wellenform sichergestellt wird, können auch Platinen geringerer Stärke eingesetzt weden, was pro herzustellendem Gefäss eine wesentliche Materialkosten-Einsparung bedeutet. Und weil der Randkragen der Kapsel dank der relativ dünnen Platine von geringer Höhe ist, kann diese wie beschrieben in einen Nu mit dem Aufschlagen der Platine aufgeschlagen werden.

## Patentansprüche

1. Verfahren zur Herstellung von Kochtöpfen und Pfannen, bei dem auf den Gefässboden aus rostfreiem Stahl eine wärmeleitfähige Platine (8) bei einer Temperatur nahe unterhalb ihres Material-Schmelzpunktes durch Impulspressung aufgeschlagen wird, und auf welche ihrerseits gleichzeitig eine Abkapselung (9) aus rostfreiem Stahl aufgeschlagen wird, derart, dass der Raum zwischen Abkapselung (9) und Gefässboden (7) praktisch vollständig mit Platinenmaterial befüllt wird und der Rand (11) der Abkapselung (9) mittels der Impulspressung geformt und dicht mit dem gekrümmten Randbereich (12) des Gefässbodens (7) verbunden wird, dadurch gekennzeichnet, dass die Abkapselung (9) aus induktionsfähigem Material besteht und in diese Abkapselung (9) mittels des Gesenkwerkzeuges (2) gezielt eine Wellenform (5) geschlagen wird, mit dem Zweck, die aufgrund des bei der Auskühlung wirkenden thermischen Bimetall-Effektes entstehenden Verziehkräfte in definierte Bahnen zu leiten und so einen regelmässigen Pfannenboden oder Topfboden zu erzielen.

2. Verfahren nach Anspruch 1, dadurch gekennzeichnet, dass mittels des Gesenkwerkzeuges (2) gezielt eine Wellenform (5) mit konzentrischen Wellen (14,15) in die Abkapselung (9) geschlagen wird.

3. Verfahren nach Anspruch 1, dadurch gekennzeichnet, dass mittels des Gesenkwerkzeuges (2) gezielt eine Wellenform (5) mit ovalen bzw. elliptischen Wellen in die Abkapselung (9) geschlagen wird.

4. Verfahren nach Anspruch 1, dadurch gekennzeichnet, dass mittels des Gesenkwerkzeuges (2) gezielt eine Wellenform (5) mit rosettenartigen Wellen, das heisst solchen mit einer beim Blick auf den Gefässboden schlangenlinienförmigen Wellenfront, in die Abkapselung (9) geschlagen wird.

5. Verfahren nach einem der vorhergehenden Ansprüche, dadurch gekennzeichnet, dass dem wellenförmigen Abkapselungsboden eine Konkavität überlagert wird, derart, dass der fertige Gefässboden auf einer ebenen Fläche ausschliesslich auf dem in radialer Richtung äussersten positiven Maximum (15) der Wellenform aufliegt.

6. Verfahren nach einem der vorhergehenden Ansprüche, dadurch gekennzeichnet, dass der mit der Platine (8) und Abkapselung (9) zu versehende Gefässboden (7) bei der Impulspressung in eine konkave Form mit einem solchen Mass der Krümmung gepresst wird, dass dieser Gefässboden nach dem Auskühlen annähernd oder ganz eben wird.

7. Verfahren nach einem der vorhergehenden Ansprüche, dadurch gekennzeichnet, dass das Mass der Krümmung der Konkavität der Abkapselung (9) jenes der Krümmung der Konkavität des Gefässbodens (7) übertrifft, sodass bei der Impulspressung diese vom Zentrum der Platine (8) aus zu wirken beginnt und allmählich auch die Bereiche in radialer Richtung davon erfasst, wodurch im Innern der Platine (8) ein radialer Materialfluss induziert wird, wodurch der Raum zwischen Gefässboden (7) und Abkapselung (9) unter Ausformung des Abkapselungsrandes (11) vollständig mit Platinenmaterial gefüllt wird und der Abkapselungsrand (11) mit dem gekrümmten Bereich (12) des Gefässbodenrandes dicht verbunden wird.

8. Verfahren nach einem der vorhergehenden Ansprüche, dadurch gekennzeichnet, dass die miteinander zu verbindenden Werkstücke (7,8,9) gleichzeitig in eine erstens vom Gefässboden (7) aus betrachtet insgesamt konkave Form gepresst werden, zweitens die Platine (8) in einen Zustand deformiert wird, wonach diese im Zentrum am dünnsten ist und gegen aussen hin dicker wird, und drittens die Abkapselung (9) durch das auf sie wirkende Gesenkwerkzeug (2) in eine Wellenform gepresst wird.

9. Gesenkwerkzeug zur Herstellung von Kochtöpfen und Pfannen nach dem Verfahren gemäss Patentanspruch 1, wobei das bewegliche Gesenkwerkzeug (2) eine konvexe Form (4) aufweist, dadurch gekennzeichnet, dass der konvexen Form (4) eine Wellenform überlagert ist, und dass der zugehörige sationäre Stempel (1) eine konkave Krümmung (3) aufweist.

10. Gesenkwerkzeug nach Anspruch 9, dadurch gekennzeichnet, dass die Wellenform im beweglichen Gesenkwerkzeug (2) mit Bezug auf das Zentrum der Aufschlagfläche konzentrische, oder ovale bzw. elliptische, oder rosettenförmige Wellen mit Blick auf das Gesenkwerkzeug schlangenlinienförmigen Wellenfronten aufweist.

11. Gesenkwerkzeug nach einem der Ansprüche 9 oder 10, dadurch gekennzeichnet, dass das Mass der Krümmung der Konvexität des bewegbaren Gesenkwerkzeuges (2) grösser ist als das Mass der Konkavität des stationären Stempels (1).

12. Verwendung eines Gesenkwerkzeuges nach einem der Ansprüche 9 bis 11 zur Herstellung von Pfannen und Kochtöpfen mit induktionsfähigen Böden.

## Claims

1. A process for manufacturing saucepans and frying pans, in which a heat-conducting plate (8) is struck onto the stainless steel pan base at a temperature close to below its material melting point by means of impulse pressing, and on top of which a stainless steel capsule (9) is then struck in turn, in such a manner that the space between capsule (9) and pan base (7) is virtually completely filled with plate material, and the edge (11) of capsule (9) is shaped by the impulse pressing and sealingly connected with the curved edge portion (12) of pan base (7), characterized in that capsule (9) is made from an inductive material and in that a die tool (2) is used to contrive a deliberate wave-shape (5) in this capsule (9) for the purpose of directing the distorting forces resulting from the thermal bimetal effect that occurs during cooling into defined paths, thereby achieving a regular saucepan or frying pan base.

2. The process of claim 1, characterized in that a deliberate wave-shape (5) with concentric waves (14,15) is struck into capsule (9) by means of die tool (2).

3. The process of claim 1, characterized in that a deliberate wave-shape (5) with oval or elliptic waves is struck into capsule (9) by means of die tool (2).

4. The process of claim 1, characterized in that a deliberate wave-shape (5) with rosette-shaped waves, i.e. ones which, when one looks at the pan base, have a serpentine-shaped wave-front, is struck into capsule (9) by means of die tool (2).

5. The process of one of the preceding claims, characterized in that a concavity is imposed on the wave-shaped capsule base in such a manner that the finished pan base will rest on a flat surface solely on the radially outermost positive maximum (15) of the wave shape.

6. The process of one of the preceding claims, characterized in that during impulse pressing, the pan base (7) to be fitted with the plate (8) and capsule (9) is pressed into a concave shape with the curvature being dimensioned such that the pan base becomes almost, or completely, flat after cooling.

7. The process of one of the preceding claims, characterized in that the extent of the curvature of the concavity of capsule (9) exceeds that of the curvature of the concavity of pan base (7) so that impulse pressing starts to take effect from the centre of plate (8) outwards and gradually also acts on the areas in the radial direction, which induces a radial material flow inside plate (8), thereby completely filling the space between pan base (7) and capsule (9) with plate material whilst shaping out capsule edge (11) and sealingly connecting capsule edge (11) with the curved portion (12) of the pan base edge.

8. The process of one of the preceding claims, characterized in that the elements to be inter-connected (7,8,9) are firstly simultaneously pressed into an overall concave shape viewed from pan base (7), and secondly, plate (8) is deformed into a state in which it is thinnest at the centre and becomes thicker towards the outside, and thirdly, capsule (9) is pressed into a wave shape by the die tool (2) acting on it.

9. A die tool for manufacturing saucepans and frying pans according to the process of claim 1, with the mobile die tool (2) having a convex shape (4), characterized in that a wave shape is imposed on convex shape (4), and in that the related stationary male die part (1) has a concave curvature (3).

10. The die tool of claim 9, characterized in that the wave shape in the mobile die tool (2) has waves which, in relation to the centre of the impacted surface, are concentric or oval or elliptic or rosette-shaped with serpentine-shaped wave-fronts when looking onto the die tool.

11. The die tool of one of claims 9 or 10, characterized in that the dimension of the curvature of the convexity of the mobile die tool (2) is greater than the dimension of the concavity of the stationary male die part (1).

12. Use of a die tool according to one of claims 9 to 11 to manufacture frying pans and saucepans with inductive bases.

## Revendications

1. Procédé pour la fabrication de casseroles, poêles et analogues, dans lequel une platine (8) conductrice thermiquement est forgée par forgeage à impulsions sur le fond du récipient en acier inoxydable à une température juste au-dessous du point de fusion de sa matière constitutive et sur laquelle une pièce d'emboîtement (9) en acier inoxydable est forgée en même temps, de sorte que l'espace entre la pièce d'emboîtement (9) et le fond du récipient (7) soit pratiquement complètement rempli par la matière de la platine et que le bord (11) de la pièce d'emboîtement (9) soit, sous l'action du forgeage à impulsions, formé et relié de manière étanche à la zone latérale courbée (12) du fond (7) de récipient, caractérisé en ce que la pièce d'emboîtement (9) est en une matière pouvant être soumise à induction et que dans cette pièce d'emboîtement (9) il est forgé avec précision une forme ondulée (5) au moyen de l'outil de matriçage (2), dans le but que les forces de gauchissement créées sur la base de l'effet thermique de bilame manifesté au moment du refroidissement soient dirigées sur des lignes d'écoulement définies, pour qu'un fond régulier de poêle ou de récipient soit ainsi obtenu.

2. Procédé suivant la revendication 1, caractérisé en ce qu'au moyen de l'outil de matriçage (2) on obtient par forgeage dans la pièce d'emboîtement (9) une forme ondulée (5) à ondulations concentriques (14, 15).

3. Procédé suivant la revendication 1, caractérisé en ce qu'au moyen de l'outil de matriçage (2) on obtient par forgeage dans la pièce d'emboîtement (9) une forme ondulée (5) à ondulations ovales ou elliptiques.

4. Procédé suivant la revendication 1, caractérisé en ce qu'au moyen de l'outil de matriçage (2) on obtient par forgeage dans la pièce d'emboîtement (9) une forme ondulée (5) à ondulations en rosaces, c'est-à-dire ayant un front d'ondes sinueux, quand on regarde le fond du récipient.

5. Procédé suivant une des revendications précédentes, caractérisé en ce qu'une concavité est superposée au fond ondulé de la pièce d'emboîtement, de sorte que le fond achevé du récipient repose sur une surface plane exclusivement par le maximum positif radialement extrême (15) de la forme ondulée.

6. Procédé suivant une des revendications précédentes, caractérisé en ce que le fond de récipient (7) devant être muni de la platine (8) et de la pièce d'emboîtement (9) est pressé, au cours du forgeage à impulsions, dans une forme concave, avec une dimension de la courbure telle que ce fond de récipient devient après le refroidissement presque ou entièrement plan.

7. Procédé suivant une des revendications précédentes, caractérisé en ce que la dimension de la courbure de la concavité de la pièce d'emboîtement (9) dépasse celle de la courbure de la concavité du fond (7) de récipient, de sorte qu'au cours du forgeage à impulsions, celle-ci commence à agir à partir du centre de la platine (8) et atteint progressivement aussi ses zones situées en direction radiale, de sorte qu'un écoulement radial de matière est induit à l'intérieur de la platine (8), si bien que l'espace entre le fond (7) du récipient et la pièce d'emboîtement (9) se remplit complètement avec la matière de la platine avec déformation du bord (11) de celle-ci et que ce bord (11) est réuni de manière étanche à la zone courbée (12) du bord du fond de récipient.

8. Procédé suivant une des revendications précédentes, caractérisé premièrement en ce que les pièces (7, 8, 9) à relier entre elles sont forgées en même temps dans une forme essentiellement concave, vue depuis le fond (7) du récipient, que deuxièmement la platine (8) est déformée dans un état suivant lequel elle est la plus mince au centre et devient plus épaisse vers l'extérieur, enfin que troisièmement la pièce d'emboîtement (9) est forgée par l'outil de matriçage (2) agissant sur elle en une forme ondulée.

9. Outil de matriçage pour la réalisation de casseroles, poêles et analogues suivant le procédé conforme à la revendication 1, l'outil mobile de matriçage (2) présentant une forme convexe (4), caractérisé en ce qu'à la forme convexe (4) il est superposé une forme ondulée et que l'enclume fixe (1) correspondante présente une courbure concave (3).

10. Outil de matriçage suivant la revendication 9, caractérisé en ce que la forme ondulée présente, dans l'outil de matriçage mobile (2), par rapport au centre de la surface de forgeage, des ondulations concentriques ou ovales et/ou elliptiques ou en forme de rosaces et/ou en ce qu'elle présente des fronts d'ondes sinueuses, quand on regarde l'outil de matriçage.

11. Outil de matriçage suivant une des revendications 9 et 10, caractérisé en ce que la dimension de la courbure de la convexité de l'outil mobile de matriçage (2) est plus grande que celle de la concavité de l'enclume fixe (1).

12. Utilisation d'un outil de matriçage suivant une des revendications 9 à 11 pour la réalisation de poêles, casseroles et analogues, comportant des fonds pouvant être soumis à induction.
